# EUROPEAN PATENT APPLICATION

(11) **EP 4 765 967 A1**
(43) Date of publication of application: **24.06.2026**
(21) Application number: 25159887.6
(22) Date of filing: 25.02.2025
(51) Int. Cl.: H04W 60/04, H04B 7/185, H04W 64/00, H04W 84/06, H04W 88/06

(54) **METHOD FOR UPDATING TRACKING AREA AND TERMINAL DEVICE**

(30) Priority: 19.12.2024 TW 113149673
(71) Applicant: Wistron Corporation, New Taipei City 22181 (TW)
(72) Inventor: CHEN, Yu Ting, 22181 New Taipei City (TW)
(74) Representative: Becker, Eberhard

(57) **Abstract**

Disclosed are a method for updating a tracking area and a terminal device (400). The method includes following steps. A geographical location of the terminal device (400) is obtained (S510), where the terminal device (400) uses a non-terrestrial network communication function. A first tracking area is determined (S520), where the terminal device (400) is located based on the geographical location. In response to determining that a tracking area update procedure needs to be executed, a request message is sent (S530) to a network device, where the request message indicates the first tracking area.

## Description

### BACKGROUND

### Technical Field

The disclosure relates to a communication technology, and in particular to a method for updating a tracking area and a terminal device.

### Related Art

3GPP has established multiple telecommunication standards, among which registration request and tracking area update (TAU) request messages play key roles in network registration and connection maintenance.

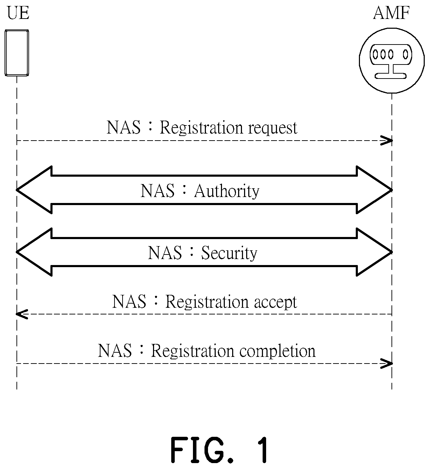

Please refer to FIG. 1, which is a schematic diagram of a non-access stratum (NAS) registration mechanism in a fifth-generation communication system. In FIG. 1, when a user equipment (UE) initially registers with the network, a registration request message is sent to the access and mobility management function (AMF) entity. The registration request message contains the UE's identity information (such as international mobile equipment identity (IMEI) or international mobile subscriber identity (IMSI)) and network capabilities (such as supported frequency bands and services) to ensure that the UE may be correctly identified and authorized by the network.

The registration accept message replied by the network may indicate that the registration request message has been successfully received by the network, and may also indicate a tracking area identifier (TAI) list, which is configured to indicate the tracking area corresponding to the UE.

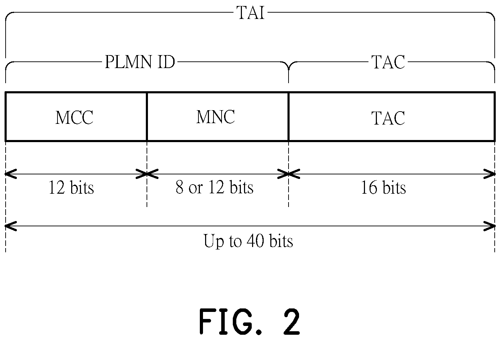

Please refer to FIG. 2, which is a schematic diagram of a TAI list. In FIG. 2, the TAI list may include a public land mobile network identifier (PLMN ID) and a tracking area code

(TAC). The PLMN ID is configured to identify the network operator, typically composing of a mobile country code (MCC) with a length of 12 bits and a mobile network code (MNC) with a length of 8 or 12 bits. Additionally, the TAC (with a length of 16 bits) identifies a specific tracking area within the network.

When moving to a new tracking area and the TAC of this tracking area is not in the TAI list, the UE may initiate the TAU request message to inform the network that the current location thereof has changed. The network subsequently replies with a TAU accept message and updates the TAI list to track to manage a location of the UE.

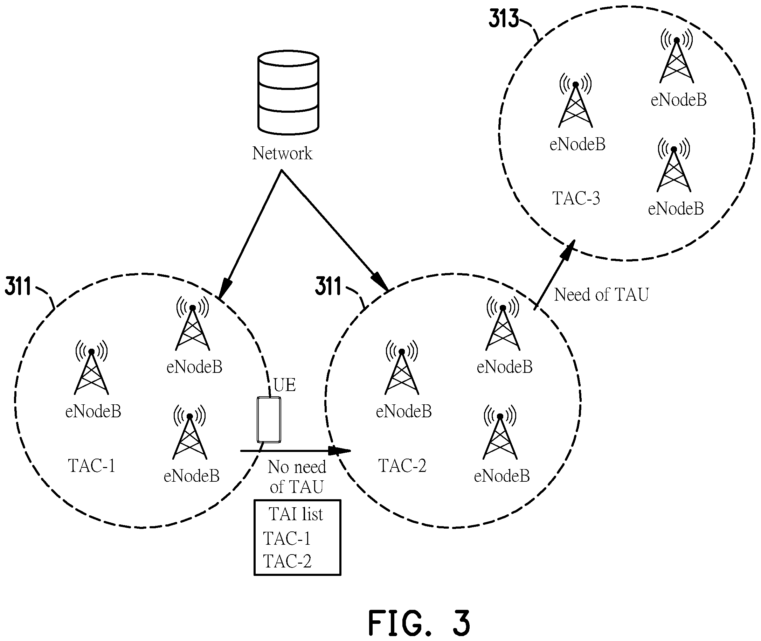

Please refer to FIG. 3, which is a schematic diagram of a TAU. In FIG. 3, it is assumed that the TAI list of the UE includes a TAC-1 and a TAC-2. In this situation, if the UE moves from a geographical area 311 corresponding to the TAC-1 to a geographical area 312 corresponding to the TAC-2, the TAU is not triggered. However, if the UE moves to a geographical area 313 corresponding to a TAC-3, the TAU is triggered because the TAC-3 is not in the TAI list.

However, if applied to a non-terrestrial network (NTN), the existing TAU procedure may face the following challenges.

(1) Frequent triggering of TAU: NTN satellites operate in a low earth orbit (LEO), moving at a speed of approximately 27,000 kilometers per hour. When switching between different satellites, the UE may frequently trigger the TAU, which results in increased core network load and consumes more device battery power.

(2) Ping pong effect: NTN satellites operate at altitudes between approximately 500 kilometers and 1200 kilometers. Taking a satellite at an altitude of 500 kilometers as an example, a maximum diameter of a coverage area thereof is about 5,064 kilometers. Therefore, to achieve uninterrupted service, the NTN must be composed of multiple satellites. However, in the overlapping boundary areas of satellite coverage, devices may frequently switch between the satellites, causing a ping pong effect.

### SUMMARY

In view of this, the disclosure provides a method for updating a tracking area and a terminal device, which may be configured to solve the above technical problems.

The disclosure provides a method for updating tracking areas. The method includes following steps. A geographical location of the terminal device is obtained by a terminal device, where the terminal device uses a non-terrestrial network communication function. A first tracking area is determined by the terminal device, where the terminal device is located based on the geographical location. In response to determining that a tracking area update procedure needs to be executed, a request message is sent to a network device by the terminal device, where the request message indicates the first tracking area.

The disclosure provides a terminal device including a transceiver and a processor. The processor is coupled to the transceiver and is configured to execute: obtaining a geographical location of the terminal device, where the terminal device uses a non-terrestrial network communication function; determining a first tracking area where the terminal device is located based on the geographical location; and in response to determining that a tracking area update procedure needs to be executed, controlling the transceiver to send a request message to a network device, where the request message indicates the first tracking area.

### BRIEF DESCRIPTION OF THE DRAWINGS

FIG. 1 is a schematic diagram of a non-access stratum (NAS) registration mechanism in a fifth-generation communication system.
FIG. 2 is a schematic diagram of a TAI list.
FIG. 3 is a schematic diagram of a TAU.
FIG. 4 is a schematic diagram of a terminal device according to an embodiment of the disclosure.
FIG. 5 is a flowchart of a method for updating a tracking area according to an embodiment of the disclosure.
FIG. 6 is a flowchart of a method for updating a tracking area according to the third embodiment of the disclosure.
FIG. 7 is a schematic diagram of an application scenario according to an embodiment of the disclosure.
FIG. 8 is a schematic diagram of an application scenario according to an embodiment of the disclosure.

### DESCRIPTION OF THE EMBODIMENTS

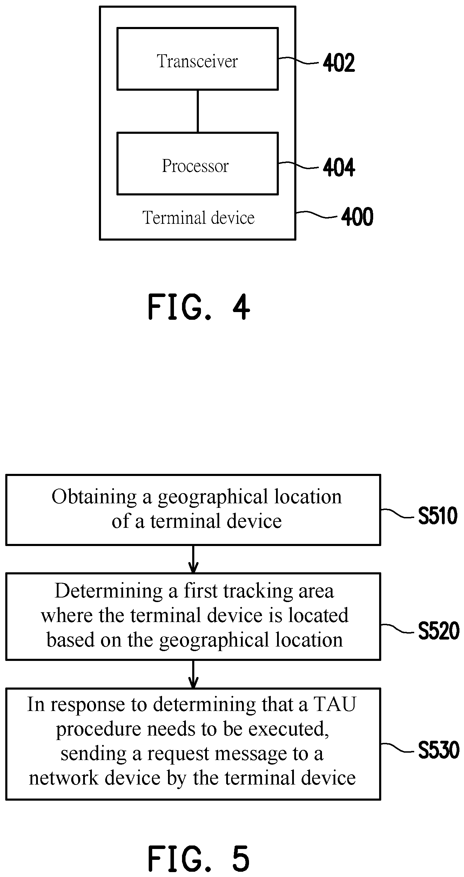

Please refer to FIG. 4, which is a schematic diagram of a terminal device according to an embodiment of the disclosure. In different embodiments, a terminal device 400 may be configured to implement various communication devices such as the UE.

In FIG. 4, the terminal device 400 includes a transceiver 402 and a processor 404. The transceiver 402 may be configured to transmit and receive signals from other devices within a coverage range thereof. The transceiver 402 is capable of performing analog-to-digital signal conversion (ADC), digital-to-analog signal conversion (DAC), modulation, demodulation, signal amplification, low-pass filtering, and band-pass filtering. For example, the transceiver 402 is configured to provide information about received signals to the processor 404, modulate data received from the processor 404 into modulated signals, and transmit the modulated signals to other devices.

In some embodiments, the terminal device 400 may further include other elements, such as an antenna module for implementing the aforementioned functions of the transceiver 402 and the processor 404.

The processor 404 may be coupled with the transceiver 402. The processor 404 may be, for example, a general-purpose processor, a special-purpose processor, a conventional processor, a digital signal processor (DSP), multiple microprocessors, one or multiple microprocessors associated with a DSP core, a controller, a microcontroller, an application specific integrated circuit (ASIC), a field programmable gate array (FPGA) circuit, any other type of integrated circuit (IC), and a state machine.

In the embodiment of the disclosure, the terminal device 400 is, for example, a communication device using an NTN communication function.

In some embodiments, the terminal device 400 is, for example, a device that may be configured to communicate with a network device, typically a mobile device held by a user, such as a smartphone, a tablet computer, an Internet of Things (IoT) device, a satellite phone, or even an unmanned aerial vehicle. These devices are capable of sending and receiving data in a wireless network to implement various applications and services.

The terminal device 400 with the NTN communication function may communicate with non-terrestrial infrastructure, not solely relying on traditional terrestrial mobile networks (such as 4G/5G base stations). This function enables the device to communicate with satellites (LEO, MEO, or GEO), high altitude platform systems (HAPS, such as high-altitude balloons or unmanned aerial vehicles).

To implement the NTN communication function, the terminal device 400 requires specific hardware and software support, for example, dedicated antennas that may support satellite frequency bands (such as Ka-band, Ku-band, and S-band), while high-performance modulation and coding technologies may address high latency and signal attenuation. Additionally, the terminal device 400 may be equipped with positioning circuits to implement precise positioning capabilities to track locations of satellites or NTN platforms.

In different embodiments, the network device communicating with the terminal device 400 includes various types of satellites and HAPS. The satellites are mainly divided into a low earth orbit (LEO) satellite, a medium earth orbit (MEO) satellite, and a geostationary orbit (GEO) satellite. The HAPS includes a high-altitude balloon and an unmanned aerial vehicle (for example, a solar-powered unmanned aerial vehicle), but may not be limited to thereto.

In an embodiment, the terminal device 400 may, for example, use the NTN communication function by enabling an NTN communication application. The terminal device 400 is, for example, a smartphone installed with the NTN communication application, and when the user of the terminal device 400 wishes to use the NTN communication function, the NTN communication application may be correspondingly enabled to allow the terminal device 400 to use the NTN communication function, but may not be limited to thereto.

In the embodiment of the disclosure, the transmission/reception of the terminal device 400 may be executed by the processor 402 controlling the transceiver 404.

In the embodiment of the disclosure, the processor 404 may access relevant modules and codes to implement the method for updating the tracking area proposed by the disclosure, the details of which are described as follows.

Please refer to FIG. 5, which is a flowchart of a method for updating a tracking area according to an embodiment of the disclosure. The method of this embodiment may be executed by the terminal device 400 in FIG. 4. The details of each step in FIG. 5 are described below in conjunction with the elements shown in FIG. 4.

In step S510, the processor 404 obtains a geographical location (hereinafter referred to as LO) of the terminal device 400.

In an embodiment, the processor 404 may, for example, obtain the current location of the terminal device 400 as the geographical location LO considered in step S510 by a global positioning system (GPS) module or other similar positioning circuits, but may not be limited to thereto.

In step S520, the processor 404 determines the first tracking area where the terminal device 400 is located based on the geographical location LO.

In an embodiment, the NTN communication application may record multiple preset tracking areas.

In some embodiments, the preset tracking areas may be, for example, multiple geographical areas distributed within the coverage range of the NTN service used by the terminal device 400, and each preset tracking area is configured with a corresponding TAC.

In an embodiment, the processor 404 may determine whether the geographical location LO is within any of the preset tracking areas. In response to determining that the geographical location LO is within a first preset area among the preset tracking areas, the processor 404 may determine that the first preset area is the first tracking area considered in step S520.

In the embodiment of the disclosure, the processor 404 may determine whether the TAU procedure needs to be executed.

In the first embodiment, the processor 404 may determine whether the TAU procedure needs to be executed by determining whether the terminal device 400 is in the registration phase of the NTN communication function.

For example, if the user has just activated the NTN communication application, the terminal device 400 may not yet be registered with the corresponding network device. In this situation, the processor 404 may determine that the terminal device 400 is in the registration phase of the NTN communication function, and vice versa.

For another example, in some embodiments, as long as the processor 404 has not yet informed the corresponding network device of the tracking area where the terminal device 400 is located, the processor 404 may determine that the terminal device 400 is in the registration phase of the NTN communication function, but may not be limited to thereto.

In the first embodiment, in response to determining that the terminal device 400 is in the registration phase of the NTN communication function, the processor 404 may determine that the TAU procedure needs to be executed.

In the second embodiment, the processor 404 may determine whether the TAU procedure needs to be executed by determining whether the first tracking area is the same as the tracking area (hereinafter referred to as the second tracking area) where the terminal device 400 was previously located.

In the second embodiment, the second tracking area is, for example, the tracking area where the terminal device 400 was located when informed to the network device last time. In other words, the network device currently knows that the terminal device 400 is located in the second tracking area.

In the second embodiment, in response to determining that the first tracking area is different from the second tracking area where the terminal device 400 was previously located, the processor 404 may determine that the TAU procedure needs to be executed.

In other words, when the processor 404 determines that the first tracking area where the terminal device 400 is currently located is different from the second tracking area previously informed to the network device, the processor 404 may determine that the TAU procedure needs to be executed, but may not be limited to thereto.

In another aspect, in response to determining that the first tracking area is the same as the second tracking area where the terminal device 400 was previously located, the processor 404 may determine that the TAU procedure does not need to be executed.

In the third embodiment, in response to the processor 404 determining in the first embodiment that the terminal device 400 is not in the registration phase of the NTN communication function, the processor 404 may have previously informed the network device of the tracking area where the terminal device 400 is located. In this situation, the processor 404 may proceed to execute the means of the second embodiment, but may not be limited to thereto.

In step S530, in response to determining that the TAU procedure needs to be executed, the processor 404 controls the transceiver 402 to send a request message (hereinafter referred to as M1) to the network device, where the request message M1 indicates the first tracking area.

In an embodiment, the request message M1 may indicate the TAC of the first tracking area, and it is assumed below that the TAC of the first tracking area is "TAC 1", but may not be limited to thereto.

In the first embodiment, the processor 404 may control the transceiver 402 to send a registration request corresponding to the NTN communication function as the request message M1 to the network device. In an embodiment, the aforementioned registration request may, for example, have the content shown in Table 1 below.

**Table 1**

| Information element | Content |
|---|---|
| Extended protocol discriminator | |
| Security header type | |
| Spare half octet | |
| Registration request message identity | |
| 5GS registration type | |
| ngKSI (non-guaranteed Key Set Identifier) | |
| 5GS mobile identity | |
| TAI list | MCC/MNC TAC 1 |

As can be seen from Table 1, compared to the known registration request, the registration request proposed in this embodiment of the disclosure further includes a TAI list. In other words, unlike the existing technology where the network provides the TAI list, in this embodiment of the disclosure, the terminal device 400 may provide the TAI list to the network device through the registration request, but may not be limited to thereto.

In the second embodiment, the processor 404 may control the transceiver 402 to send a TAU request message as the request message M1 to the network device. In an embodiment, the aforementioned TAU request message may, for example, have the content shown in Table 2 below.

**Table 2**

| Information element | Content |
|---|---|
| Protocol discriminator | |
| Security header type | |
| TAU request message identity | |
| EPS update type | |
| NAS key set identifier | |
| Old Global Unique Temporary Identifier (GUTI) | |
| TAI list | MCC/MNC TAC 1 |

As can be seen from Table 1, compared to the known TAU request message, the TAU request message proposed in this embodiment of the disclosure further includes a TAI list. In other words, unlike the existing technology where the network provides the TAI list, in this embodiment of the disclosure, the terminal device 400 may provide the TAI list to the network device through the TAU request message, but may not be limited to thereto.

In an embodiment, after receiving the request message M1, the network device may correspondingly return a response message to the terminal device 400, where the response message may indicate that the TAU procedure of the terminal device 400 has been completed.

In the first embodiment where the request message M1 is a registration request, the response message may, for example, be an accept registration message that does not indicate any tracking area.

In the second embodiment where the request message M1 is a TAU request message, the response message may, for example, be an accept TAU message that does not indicate any tracking area.

From the above, it may be seen that, unlike the existing manner where the network device responds to a TAU request message from the UE by providing an updated TAI list to the UE, the technical solution of this embodiment of the disclosure may allow the terminal device 400 with the NTN communication function, when determining the need to initiate a TAU procedure, to inform the network device of the first tracking area where the terminal device 400 is currently located through the request message M1 (for example, the registration request and/or the TAU request message).

Thereby, the timing of initiating the TAU procedure may be led by the terminal device 400. In this situation, when the location of the terminal device 400 is fixed or has not moved to a new tracking area, the TAU is not triggered due to changes in satellite coverage, which is beneficial for reducing the power consumption of the terminal device 400.

Additionally, since the terminal device 400 may accurately obtain the geographical location LO (for example, the GPS position of the terminal device 400), the processor 404 may precisely determine the tracking area where terminal device 400 is located, thereby reducing the problem of ping-pong effect.

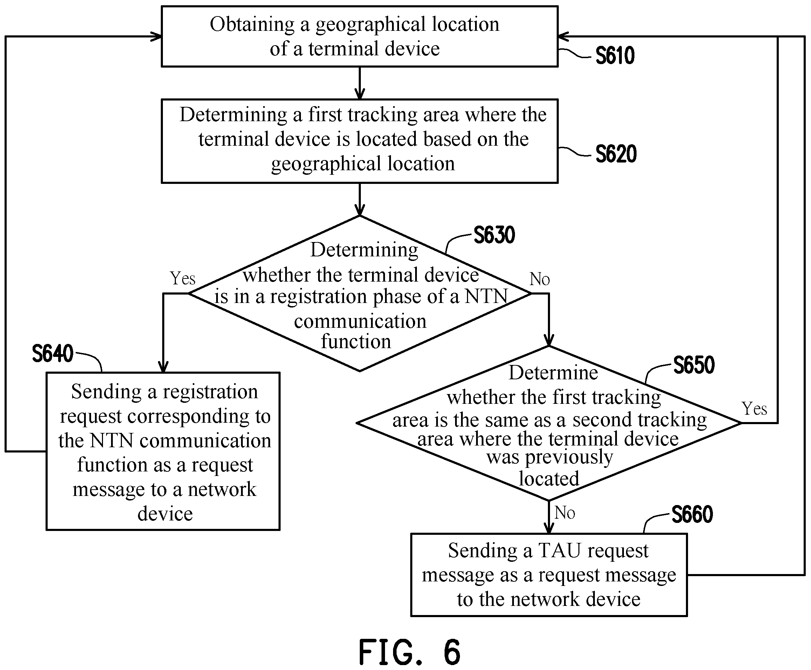

Please refer to FIG. 6, which is a flowchart of a method for updating a tracking area according to the third embodiment of the disclosure. The method of this embodiment may be executed by the terminal device 400 shown in FIG. 4. The details of each step in FIG. 6 are described below in conjunction with the components shown in FIG. 4.

In step S610, the processor 404 obtains the geographical location LO of the terminal device 400. In step S620, the processor 404 determines the first tracking area where the terminal device 400 is located based on the geographical location LO. The details of step S610 and step S620 may refer to the relevant descriptions of step S510 and step S520, which are not repeated here.

In step S630, the processor 404 may determine whether the terminal device 400 is in the registration phase of the NTN communication function.

If the determination is yes, the processor 404 may proceed to execute step S640 to send a registration request corresponding to the NTN communication function as the request message M1 to the network device. Afterwards, the processor 404 may return to step S610 to continuously monitor whether the geographical location of the terminal device 400 has changed to correspond to other tracking areas.

In another aspect, if the processor 404 determines that the terminal device 400 is not in the registration phase of the NTN communication function in step S630, the processor 404 has previously informed the network device of the tracking area (for example, the aforementioned second tracking area) where the terminal device 400 is located. In this situation, the processor 404 may proceed to execute step S650 to determine whether the first tracking area is the same as the second tracking area where the terminal device 400 was previously located.

If the determination is yes, there is no need to execute the TAU procedure, and the processor 404 may return to step S610 to continuously monitor whether the geographical location of the terminal device 400 has changed to correspond to other tracking areas.

In another aspect, if the processor 404 determines that the first tracking area is different from the second tracking area where the terminal device 400 was previously located in step S650, the terminal device 400 has moved to a new tracking area. In this situation, the processor 404 may execute step S660 to send a TAU request message as the request message M1 to the network device. Afterwards, the processor 404 may return to step S610 to continuously monitor whether the geographical location of the terminal device 400 has changed to correspond to other tracking areas, but may not be limited to thereto.

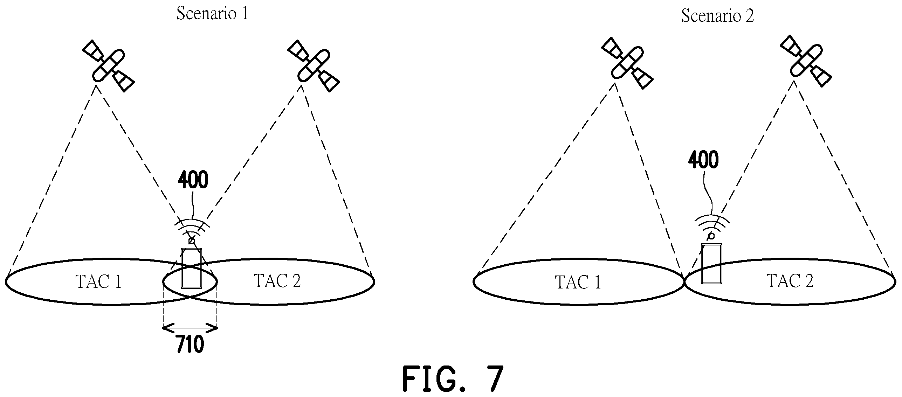

Please refer to FIG. 7, which is a schematic diagram of an application scenario according to an embodiment of the disclosure.

In FIG. 7, a scenario 1 is, for example, a known TAU mechanism. In the scenario 1, since a TAC 1 and a TAC 2 are defined based on the signal coverage of different satellites, there may be an overlapping area 710 of several kilometers between the TAC 1 and the TAC 2. When the terminal device 400 is located in the overlapping area 710, the aforementioned ping-pong effect may occur.

Additionally, a scenario 2 is, for example, the mechanism proposed by the embodiment of the disclosure. In the scenario 2, since the TAC 1 and the TAC 2 are distinguished by geographical location/area, it may be arranged that there is less likely to be an overlapping area between the TAC 1 and the TAC 2, thereby avoiding the aforementioned ping-pong effect for the terminal device 400.

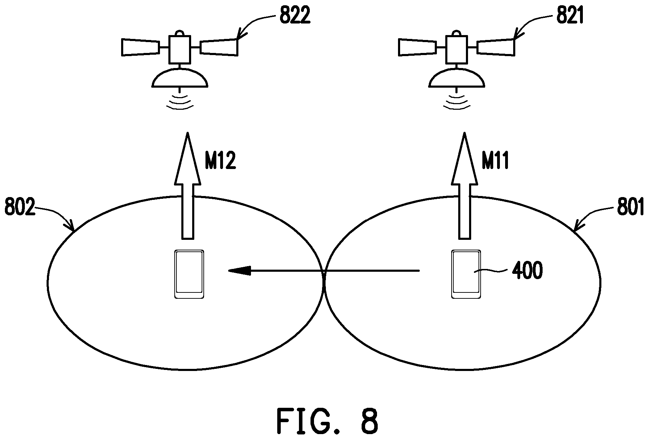

Please refer to FIG. 8, which is a schematic diagram of an application scenario according to an embodiment of the disclosure. In this embodiment, when activating the NTN communication function while located in the tracking area 801, the terminal device 400 may determine the current location thereof in the tracking area 801 after obtaining the current geographical location thereof. Subsequently, the terminal device 400 may send a registration request corresponding to the NTN communication function as a request message M11 to a network device 821 (for example, a satellite), where the request message M11 may indicate the TAC of the tracking area 801 (for example, "the TAC 1").

In this situation, the request message M11 may have the format of Table 1, for example, and the TAI list therein may include MCC, MNC, and TAC 1, but may not be limited to thereto.

Correspondingly, after receiving the request message M11, the network device 821 may return a response message indicating (for example, an accept registration message that does not indicate any tracking area) that the TAU procedure of the terminal device 400 has been completed.

Additionally, after moving to a tracking area 802, the terminal device 400 may determine the current location in the tracking area 802 after obtaining the current geographical location thereof. In this situation, since the terminal device 400 is no longer in the registration phase of the NTN communication function, the terminal device 400 may send a TAU request message as a request message M12 to a network device 822 when determining that the current tracking area 802 is different from the previous tracking area 801, where the request message M12 may indicate the TAC (for example, "the TAC 2") of the tracking area 802.

In this situation, the request message M12 may have the format of Table 2, for example, and the TAI list therein may include MCC, MNC, and TAC 2, but may not be limited to thereto.

Correspondingly, after receiving the request message M12, the network device 821 may return a response message (for example, an accept TAU message that does not indicate any tracking area) indicating that the TAU procedure of the terminal device 400 has been completed.

In summary, the method proposed by the embodiment of the disclosure may allow the terminal device using the NTN communication function, when determining the need to initiate a TAU procedure, to inform the network device of the tracking area where the terminal device is currently located through the request message (for example, the registration request and/or the TAU request message).

Thereby, the timing of initiating the TAU procedure may be led by the terminal device, which is conducive to reducing the power consumption of the terminal device and mitigating the problem of ping-pong effect.

## Claims

1. A method for updating a tracking area, **characterized by** comprising:
obtaining (S510), by a terminal device (400), a geographical location of the terminal device (400), wherein the terminal device (400) uses a non-terrestrial network communication function;
determining (S520), by the terminal device (400), a first tracking area where the terminal device (400) is located based on the geographical location; and
in response to determining that a tracking area update procedure needs to be executed, sending (S530), by the terminal device (400), a request message to a network device, wherein the request message indicates the first tracking area.

2. The method for updating the tracking area according to claim 1, further comprising:
determining (S630) whether the terminal device (400) is in a registration phase of the non-terrestrial network communication function;
in response to determining that the terminal device (400) is in the registration phase of the non-terrestrial network communication function, determining that the tracking area update procedure needs to be executed, and sending (S640), by the terminal device (400), a registration request corresponding to the non-terrestrial network communication function as the request message to the network device.

3. The method for updating the tracking area according to claims 1 or 2, further comprising:
in response to determining that the first tracking area is different from a second tracking area where the terminal device (400) was previously located, determining that the tracking area update procedure needs to be executed, and sending (S660), by the terminal device (400), a tracking area update request message as the request message to the network device.

4. The method for updating the tracking area according to claim 1, further comprising:
receiving, from the network device, a response message corresponding to the request message, wherein the response message indicates that the tracking area update procedure for the terminal device (400) has been completed.

5. The method for updating the tracking area according to claim 4, wherein the request message is a registration request corresponding to the non-terrestrial network communication function, and the response message is an accept registration message which does not indicate any tracking area.

6. The method for updating the tracking area according to claim 4, wherein the request message is a tracking area update request message, and the response message is an accept tracking area update message which does not indicate any tracking area.

7. The method for updating the tracking area according to any one of claims 1 to 6, further comprising:
using, by the terminal device (400), the non-terrestrial network communication function through enabling a non-terrestrial network communication application, wherein the non-terrestrial network communication application records a plurality of preset tracking areas.

8. The method for updating the tracking area according to claim 7, wherein the plurality of preset tracking areas comprises a first preset area, and determining the first tracking area where the terminal device (400) is located based on the geographical location comprises:
in response to determining that the geographical location is within the first preset area, determining that the first preset area is the first tracking area.

9. The method for updating the tracking area according to any one of claims 1 to 8,
wherein the request message indicates a tracking area code of the first tracking area.

10. A terminal device (400), **characterized by** comprising:
a transceiver (402); and
a processor (404), coupled to the transceiver (402) and configured to:
obtain (S510) a geographical location of the terminal device (400), wherein the terminal device (400) uses a non-terrestrial network communication function;
determine (S520) a first tracking area where the terminal device (400) is located based on the geographical location; and
in response to determining that a tracking area update procedure needs to be executed, control the transceiver to send (S530) a request message to a network device, wherein the request message indicates the first tracking area.

11. The terminal device (400) according to claim 10, wherein the processor is further configured to perform:
determining (S630) whether the terminal device (400) is in a registration phase of the non-terrestrial network communication function;
in response to determining that the terminal device (400) is in the registration phase of the non-terrestrial network communication function, determining that the tracking area update procedure needs to be executed, and controlling the transceiver to send (S640) a registration request corresponding to the non-terrestrial network communication function as the request message to the network device.

12. The terminal device (400) according to claims 10 or 11, wherein the processor is further configured to perform:
in response to determining that the first tracking area is different from a second tracking area where the terminal device (400) was previously located, determining that the tracking area update procedure needs to be executed, and controlling the transceiver to send (S660) a tracking area update request message as the request message to the network device.

13. The terminal device (400) according to claim 10, wherein the processor is further configured to perform:
controlling the transceiver to receive, from the network device, a response message corresponding to the request message, wherein the response message indicates that the tracking area update procedure for the terminal device (400) has been completed.

14. The terminal device (400) according to claim 13, wherein the request message is a registration request corresponding to the non-terrestrial network communication function, and the response message is an accept registration message which does not indicate any tracking area.

15. The terminal device (400) according to claim 13, wherein the request message is a tracking area update request message, and the response message is an accept tracking area update message which does not indicate any tracking area.

## Amended claims

### Amended claims in accordance with Rule 137(2) EPC.

1. A method for updating a tracking area, comprising:
obtaining (S510), by a terminal device (400), a geographical location of the terminal device (400), wherein the terminal device (400) uses a non-terrestrial network communication function;
determining (S520), by the terminal device (400), a first tracking area where the terminal device (400) is located based on the geographical location; and
in response to determining that a tracking area update procedure needs to be executed, sending (S530), by the terminal device (400), a request message to a network device, wherein the request message indicates the first tracking area;
wherein the method for updating the tracking area is **characterized by** further comprising:
determining (S630) whether the terminal device (400) is in a registration phase of the non-terrestrial network communication function;
in response to determining that the terminal device (400) is in the registration phase of the non-terrestrial network communication function, determining that the tracking area update procedure needs to be executed, and sending (S640), by the terminal device (400), a registration request corresponding to the non-terrestrial network communication function as the request message to the network device;
in response to determining that the terminal device (400) is not in the registration phase of the non-terrestrial network communication function, determining (S650) whether the first tracking area is the same as a second tracking area where the terminal device (400) was previously located; and
in response to determining that the first tracking area is different from a second tracking area where the terminal device (400) was previously located, determining that the tracking area update procedure needs to be executed, and sending (S660), by the terminal device (400), a tracking area update request message as the request message to the network device.

2. The method for updating the tracking area according to claim 1, further comprising:
receiving, from the network device, a response message corresponding to the request message, wherein the response message indicates that the tracking area update procedure for the terminal device (400) has been completed.

3. The method for updating the tracking area according to claim 2, wherein the request message is a registration request corresponding to the non-terrestrial network communication function, and the response message is an accept registration message which does not indicate any tracking area.

4. The method for updating the tracking area according to claim 2, wherein the request message is a tracking area update request message, and the response message is an accept tracking area update message which does not indicate any tracking area.

5. The method for updating the tracking area according to any one of claims 1 to 4, further comprising:
using, by the terminal device (400), the non-terrestrial network communication function through enabling a non-terrestrial network communication application, wherein the non-terrestrial network communication application records a plurality of preset tracking areas.

6. The method for updating the tracking area according to claim 5, wherein the plurality of preset tracking areas comprises a first preset area, and determining the first tracking area where the terminal device (400) is located based on the geographical location comprises:
in response to determining that the geographical location is within the first preset area, determining that the first preset area is the first tracking area.

7. The method for updating the tracking area according to any one of claims 1 to 6, wherein the request message indicates a tracking area code of the first tracking area.

8. A terminal device (400), comprising:
a transceiver (402); and
a processor (404), coupled to the transceiver (402) and configured to:
obtain (S510) a geographical location of the terminal device (400), wherein the terminal device (400) uses a non-terrestrial network communication function;
determine (S520) a first tracking area where the terminal device (400) is located based on the geographical location; and
in response to determining that a tracking area update procedure needs to be executed, control the transceiver to send (S530) a request message to a network device, wherein the request message indicates the first tracking area;
wherein the terminal device (400) is **characterized in that** the processor is further configured to perform:
determining (S630) whether the terminal device (400) is in a registration phase of the non-terrestrial network communication function;
in response to determining that the terminal device (400) is in the registration phase of the non-terrestrial network communication function, determining that the tracking area update procedure needs to be executed, and controlling the transceiver to send (S640) a registration request corresponding to the non-terrestrial network communication function as the request message to the network device;
in response to determining that the terminal device (400) is not in the registration phase of the non-terrestrial network communication function, determining (S650) whether the first tracking area is the same as a second tracking area where the terminal device (400) was previously located; and
in response to determining that the first tracking area is different from a second tracking area where the terminal device (400) was previously located, determining that the tracking area update procedure needs to be executed, and controlling the transceiver to send (S660) a tracking area update request message as the request message to the network device.

9. The terminal device (400) according to claim 8, wherein the processor is further configured to perform:
controlling the transceiver to receive, from the network device, a response message corresponding to the request message, wherein the response message indicates that the tracking area update procedure for the terminal device (400) has been completed.

10. The terminal device (400) according to claim 9, wherein the request message is a registration request corresponding to the non-terrestrial network communication function, and the response message is an accept registration message which does not indicate any tracking area.

11. The terminal device (400) according to claim 9, wherein the request message is a tracking area update request message, and the response message is an accept tracking area update message which does not indicate any tracking area.
